# EUROPEAN PATENT SPECIFICATION

(11) **EP 3 303 198 B1**
(45) Date of publication and mention of the grant of the patent: **05.01.2022**
(21) Application number: 16727990.0
(22) Date of filing: 02.06.2016
(51) Int. Cl.: B65G 69/00, E05D 13/00, E06B 9/62

(54) **HEAD SEAL APPARATUS FOR DOCK RAMP ASSEMBLY**
KOPFDICHTUNGSVORRICHTUNG FÜR EINE DOCKRAMPENANORDNUNG
APPAREIL DE JOINT DE DALLE POUR ENSEMBLE RAMPE DE QUAI

(30) Priority: 02.06.2015 IE 20150164
(43) Date of publication of application: 11.04.2018
(73) Proprietor: Esidock Limited, Dublin 7 (IE)
(72) Inventor: WHELAN, Francis, Foulksmills County Wexford (IE)
(74) Representative: FRKelly
(86) International application number: PCT/EP2016/062566
(87) International publication number: WO 2016/193398

(56) References cited:
- EP-A2- 0 562 917
- DE-A1- 2 737 493
- US-A- 66 995
- US-A- 5 159 967
- US-A1- 2015 007 513
- US-B1- 6 814 658

## Description

### Introduction

This invention relates to a head seal apparatus for a dock ramp assembly.

Dock ramp assemblies are used in facilities to allow transport vehicles to dock with the facility and also allow a ramp, alternatively known as a bridging plate, to connect an interior of the transport vehicle with an interior of the facility. In this manner, unloading of goods from the interior of the transport vehicle through at least one access door on the transport vehicle into the interior of the facility can be achieved. Or, loading of loads from the interior of the facility into the interior of the transport vehicle, can be achieved in an efficient manner.

Furthermore, where the goods must be kept in a controlled environment, for example, within a particular temperature range, dock ramp assemblies are used to create a substantially continuous environmentally-controlled link, by way of a ramp, between the interior of the transport vehicle and the interior of the facility. Typically the dock ramp assemblies will have a facility door to keep the facility enclosed.

The term "transport vehicle" shall be understood to encompass any type of vehicle which is used to transport goods. Typically, the transport vehicle will be an articulated truck and trailer; however, it will be apparent to the person skilled in the art that vans and other types of commercial transport vehicles, such as railcars, may be used with the apparatus of the present disclosure. The transport vehicles will generally have rear access doors, which are either pivoting doors, vertical sliding doors, or, vertical rolling doors. The transport vehicles dock with the dock ramp assemblies by manoeuvring to a position adjacent the dock ramp assembly so as to load or unload the goods through such access doors.

Throughout this specification, the term "dock ramp assembly" shall be understood to encompass any type of docking bay used to provide a connection or link between the transport vehicle and the facility. A dock ramp assembly generally defines a docking opening having four sides. Dock ramp assemblies normally comprise a bridging plate or ramp to connect between the interior of the facility and the docked transport vehicle.

The present disclosure has been designed to work with a wide variety of transport vehicles.

Under normal usage, dock ramp assemblies as known from the prior art, allow a transport vehicle to dock with them to permit the loading or unloading of goods. The transport vehicle is usually reversed to a position adjacent the dock ramp assembly and a bridging plate is extended from the dock ramp assembly into the transport vehicle. The dock ramp assemblies may comprise a bumper to prevent the transport vehicle from reversing into the dock ramp assembly and damaging the dock ramp assembly.

In many cases, once the transport vehicle has been reversed to a position adjacent the dock ramp assembly, it is important for a seal to be created around the transport vehicle to prevent external contaminants from entering either the interior of the facility, or, the interior of the transport vehicle during the loading/unloading process. This is particularly important in food-related industries where unwanted contaminants such as rodents, insects, flies and fleas, which could become trapped in the interior of the transport vehicle, can result in an entire load of transported food being rejected by a receiving customer upon the customer opening the transport vehicle and discovering the unwanted contaminants therein. In some examples known from the prior art, side seals along both sides of the transport vehicle and an upper seal over the top of the transport vehicle are formed.

However, as the contents of the vehicle are unloaded into the facility, or goods are loaded from the facility into the vehicle, the weight of the vehicle will vary and accordingly there will be variations in the height of the vehicle. Such height variations may cause a gap to be formed between a head seal at the upper portion of the dock ramp assembly and the top of the transport vehicle through which contaminants may enter the interior of the transport vehicle and/or the interior of the facility. This is a clear disadvantage and a solution to this problem is sought as dock ramp assemblies must accommodate transport vehicles of different types and dimensions whilst at the same time minimise the possibility that contaminants can enter the facility or the transport vehicle.

United States Patent Number US 4,262,458 (O'NEAL) discloses a complete, foursided inflatable seal which comprises two side seals, a head seal and a bottom seal. The seals surround a docking opening on a building and are used to create a connection between the building and a rail car, or other such similar vehicle.

However, not all dock ramps can benefit from docking with a railcar or vehicle whereby the height and the positioning of the transport vehicle relative to the docking opening are predetermined and preset. In many cases where the transport vehicle is a truck and trailer, the height of the rear doors on the trailer will depend on the model and the load in the trailer itself as the height of the transport vehicle will change with the weight of the goods it is carrying.

This is, as mentioned above, due to the fact that transport vehicles have different dimensions, a seal which can accommodate the varying different heights of the different transport vehicles has proved difficult to design. Most transport vehicles have a loading height in the range of 1 metre to 1.4 metres and the seals currently used in dock ramp assemblies known from the prior art cannot accommodate such variations in height between different transport vehicles.

It is a goal of the present disclosure to provide an apparatus that overcomes at least one of the above-mentioned problems.

EP 0 562 917 A2 discloses a head sealing apparatus according to the preamble of claim 1.

### Summary of the Invention

A head sealing apparatus for forming a seal between the top peripheral edge of a substantially vertically-oriented opening and a top surface of an industrially-sized object when the object is positioned within the opening is provided. The apparatus comprises: a vertically moveable head seal configured to extend downwards over the opening and contact the top surface of the object, and a vertically moveable counterweight arrangement for balancing the load of the head seal so that the height of the head seal is adjustable to allow for variations in the height of the object.

In one embodiment, the apparatus may be configured for forming a seal between the top of an opening of a facility and a roof of a transport vehicle when the transport vehicle is docked with the facility. However, the present disclosure is not limited to transport vehicles, and may be applicable to other industrially-sized objects such as containers, trailers, cages, receptacles, enclosures, vessels, drums, boxes, crates, or other such items for which a seal is required to be formed between a top surface of such objects and an opening in which the objects are positioned or docked.

The apparatus has a co-axial counterweight arrangement for balancing the load of the head seal. It will be understood that the present application is concerned with only the top or head seal portion of an opening. In the context of the present application therefore, a 'head seal' may refer to a seal for sealing the top peripheral edge of a docking opening with the roof of a vehicle reversed into the docking opening. The head seal extends to provide a horizontal seal and is moveable in a vertical direction.

The advantage of using such a seal arrangement is that the seal may be configured to be in constant contact with a roof of the vehicle, thus sealing a gap between the opening on the vehicle and the docking opening, and allowing for variations in the height of the vehicle relative to the docking opening.

In one embodiment, after a transport vehicle has reversed up into a suitable docking position, a complete horizontal seal, extending between the top of the docking opening, and the access door opening on the transport vehicle, can be created. Furthermore, as contents of the vehicle are unloaded into the facility, or goods are loaded from the facility into the vehicle, by providing a counterweight balancing arrangement, the height of the head seal can be adjusted to compensate for variations in the height of the vehicle while maintaining a complete horizontal seal.

By maintaining a complete horizontal seal between the vehicle and the docking opening, unwanted contaminants can be prevented from entering the interior of the transport vehicle and/or the interior of the facility. It will be understood that a facility door may be shut to close off the docking opening, and a vehicle door on the transport vehicle may also be shut to close off the access door opening on the transport vehicle; so that the receiving cavity is defined by the facility door, the vehicle door and the seal.

The advantage of having the upper seal vertically moveable is that transport vehicles of different heights can be accommodated whilst a complete seal can still be formed between the access door opening on the transport vehicle and the docking opening in the facility. This provides a configuration that accounts for transport vehicles of different heights and dimensions. The present disclosure provides for the head seal to be moved vertically down, into a position whereby the seal can be actuated to form a complete seal between the docking opening and the roof of a transport vehicle which is docked.

The sealed passageway between the interior of the transport vehicle and the interior of the facility prevents any external contaminants, such as rodents, insects, fleas and flies from entering either the interior of the facility or interior of the transport vehicle. This ensures that any goods which need to be transported by the transport vehicle can be kept within a controlled environment, inside the interior of the facility, which is likely to be a food production plant or a manufacturing plant, through the sealed passageway and into the interior of the transport vehicle. This is extremely desirable for many industries, and as mentioned above, in particular the food industry where the manufacture, storage and transport of the food in a fully controlled environment is preferable from a hygienic, and, a health and safety perspective.

The counterweight arrangement comprises first and second counterweights for balancing the weight of the head seal and configured to move relative to each other. The first counterweight is configured to balance the weight of the head seal in an operable position. The second counterweight is configured to limit the upward movement of the first counterweight relative to the second counterweight.

The apparatus further comprises a roller tube and a motorised roller tube, wherein a first cable attached to the first counterweight is further attached to and configured to be wound around the roller tube. A second cable is attached to the second counterweight and be further attached to and configured to be wound around the motorised tube. The motorised roller tube and the second counterweight are configured to move the head seal between a retracted position and the operable position.

In use, with the head seal in the retracted position, the weight of the head seal biases the first counterweight upwards against the second counterweight, the motorised roller tube is activated to wind the second counterweight in an upward direction, the first counterweight moves upward with the second counterweight, and the upward movement of the first and second counterweights causes the head seal to move downwards towards the top of the object until the first counterweight balances the weight of the head seal.

The head seal may comprise a blind member configured to be wound around the roller rube. The head seal may also comprise a flexible edge seal portion at a distal end of the blind member, the flexible edge seal portion being configured for forming a seal between the opening and the top surface of the object.

Some advantages of the present invention include the fact that the head seal accommodates variations in vehicle height caused by loading or unloading of a vehicle. The present invention
also caters for the camber of vehicle roof should the vehicle be carrying a greater weight on one side. In addition, the present disclosure allows for a bounce of vehicle should it manoeuvre over a ramp or if a heavy weight is loaded or unloaded

### Detailed Description of Embodiments

The present invention will be more clearly understood from the following description of some embodiments thereof, given by way of example only, with reference to the accompanying drawings, in which:
Figure 1 is a perspective view of a head sealing apparatus in accordance with
an embodiment of the present invention;
Figure 2 is a detailed view of a counterweight arrangement of the apparatus of Figure 1, including first and second counterweights, according to an embodiment of the present invention;
Figure 3 is a perspective view of the first and second counterweights of

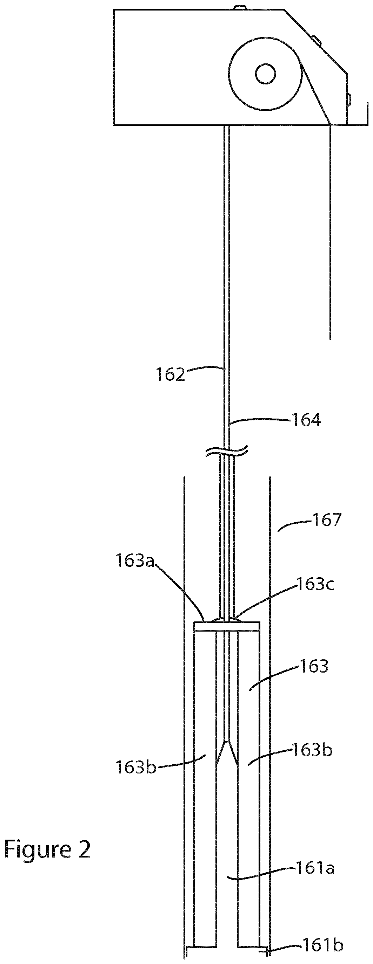

Figure 2, according to an embodiment of the present invention; and

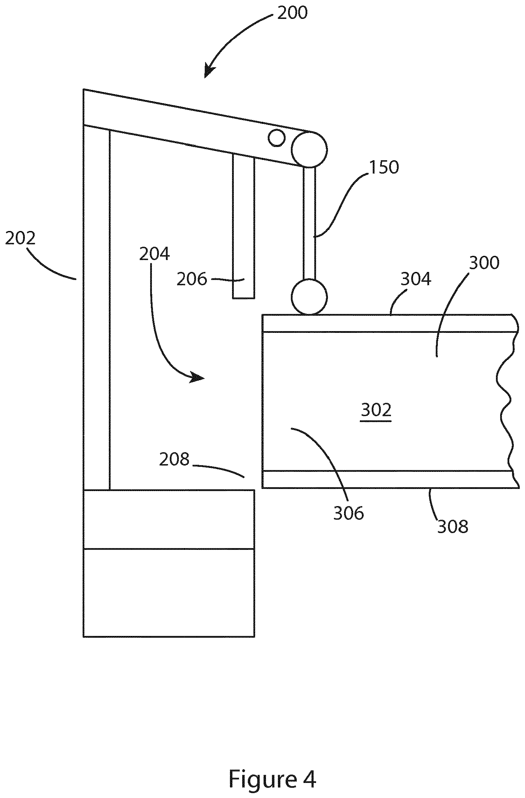

Figure 4 is a side view of a dock ramp assembly in which the head sealing apparatus of the present invention is installed.

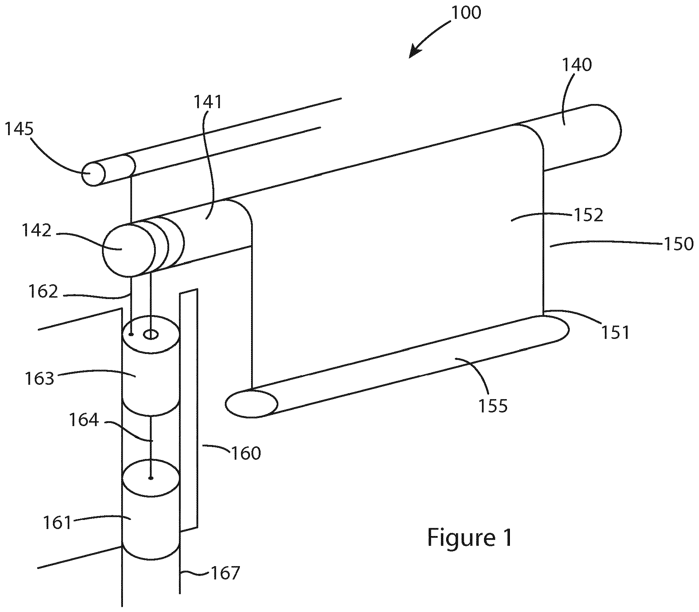

Figure 1 is a perspective view of a head sealing apparatus 100 in accordance with an embodiment of the present invention.

Figure 2 is a detailed view of first and second counterweights of the apparatus 100 of Figure 1, according to an embodiment of the present disclosure. Referring to Figure 1, the head sealing apparatus 100 comprises a head seal 150 and a counterweight arrangement 160 for balancing the weight of the head seal 150. The head seal 150 comprises a blind member 152 and a flexible edge seal portion 155 at a distal end 151 of the blind 150. The apparatus 100 comprises a roller tube 140 on bearings around which the blind member 152 is configured to be wound. The blind member 152 may be configured to be wound around a main portion of the roller tube 140. The counterweight arrangement 160 comprises a first counterweight 161 configured to balance the weight of the head seal 150 in an operable position. More specifically, the first counterweight 161 is attached to a first cable 164 for winding around the roller tube 140. The first cable 164 may be wound around an end 142 of the roller tube 140. The apparatus 100 further comprises a motorised roller tube 145. As illustrated in Figure 1, the motorised roller tube 145 may be disposed parallel to and adjacent to the roller tube 140. That is, the motorised roller tube 145 may be disposed separate to the roller tube 140. The motorised roller tube 145 and the roller tube 140 may be disposed one above the other in vertical alignment with the counterweight arrangement 160. That is, the motorised roller tube 145 and the roller tube 140 may be aligned in the same axis as the counterweight arrangement 160. However, the present teaching is not limited to such a configuration and other arrangements are also possible. For example, in other embodiments, the motorised roller tube 145 and the roller tube 140 may be arranged in an inner/outer co-axial tube arrangement, wherein both tubes are configured to rotate independent of each other. For example, an inner motorised roller tube may be disposed within an outer roller tube.

The motorised roller tube 145 may comprise a motor disposed therein for rotating the motorised roller tube 145. The counterweight arrangement 160 further comprises a second counterweight 163. The second counterweight 163 is configured to assist in the counterweighting of the head seal 150 and to move the head seal 150 between a retracted position and an operable position. The second counterweight 163 is attached to a second cable 162 configured to be wound about the motorised roller tube 145. The second cable 162 may be wound around an end 142 of the motorised roller tube 145. The first and second counterweights 161 and 163 are configured to move relative to each other. This mechanism is explained further below.

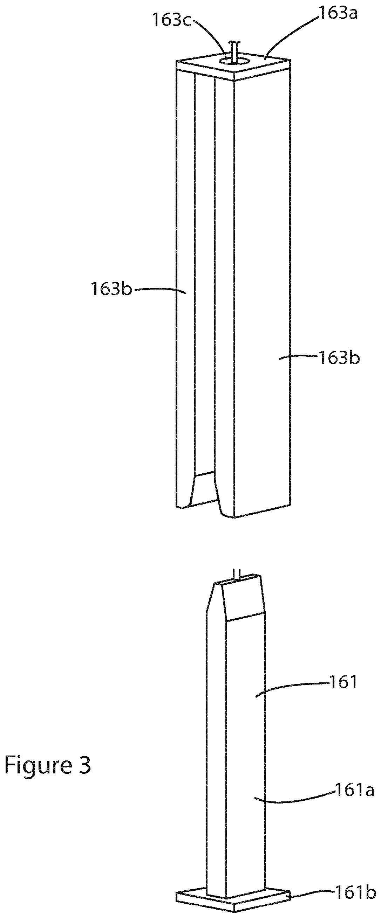

Referring to Figures 2 and 3, the first counterweight 161 may be configured in the form of a linear elongated member 161a having an edge portion 161b protruding laterally from a bottom of the elongated member 161a. In other words, the first counterweight 161 may be configured in the form of a reverse T shape when in use. The second counterweight 163 may be configured in the form of an elongated housing adapted to receive the first counterweight 161. As shown in Figures 2 and 3, the second counterweight 163 may be configured in the form of a reverse elongated U shape when in use. The second counterweight 163 may be attached to the second cable 162 at a lateral portion 163a connecting two longitudinal side portions 163b of the second counterweight 163. The first cable 164 may pass through an aperture 163c in the lateral portion 163a of the second counterweight 163. In this manner, the first counterweight 161 may be configured to slide within the second counterweight 163. The edge portion 161b of the first counterweight 161 is configured to abut the longitudinal side portions 163b of the second counterweight 163 to limit the movement of the first counterweight 161 upward relative to the second counterweight 163. The first and second counterweights 161 and 163 may be constrained to move in a vertically oriented guide rail 167. The second counterweight 163 may be substantially the same weight as the first counterweight 161. In an embodiment, the weight of each of the first and second counterweights 161 and 163 may be about 10 kg. The flexible edge seal portion 155 of the head seal 150 may be heavier than the weight of each of the first and second counterweights 161 and 163. In an embodiment, the weight of the flexible edge seal portion 155 may be about 15 kg.

Referring to Figure 1, the counterweight arrangement 160 and the head seal 150 are configured to move in a substantially vertical direction opposite to each other. More specifically, the head seal 150 is configured to move in a substantially vertical direction opposite to that of the vertical movement of the counterweight arrangement 160. In other words, while the counterweight arrangement 160 is actuated upwards, the head seal 150 moves downwards. Accordingly, it can be seen that a co-axial counterweight system is provided in the vertical axis. That is, the gravitational force of the counterweight arrangement 160 balances the gravitational force of the head seal 150.

With the blind member 152 rolled up, that is, a substantial portion of the blind member 152 wound around the roller tube 140, the flexible edge seal portion 155 is at its closest to the roller tube 140. In this position, the first and second counterweights 161 and 163 are at their lowest positions and the head seal 150 is in a retracted position. With the weight of the flexible edge portion 155 being greater than that of the first counterweight 161, in this position, the weight of the flexible edge seal portion 155 biases the first counterweight 161 against the second counterweight 163 as described above. The upward movement of the first counterweight 161 is constrained by the edge portion 161b of the first counterweight 161 abutting the longitudinal side portions 163b of the second counterweight 163. When the motorised roller tube 145 is activated to wind the second counterweight 163 in an upward direction, the first counterweight 161 moves upward with the second counterweight 163. The upward movement of the first and second counterweights 161 and 163 causes the blind member 152 to unroll from the roller tube 140 and move downwards towards the top surface of an object such as a vehicle. The first and second counterweights 161 and 163 continue upwards until the the first counterweight 161 alone balances the weight of the blind member 152 and the flexible edge seal portion 155. When this balance is reached, the first counterweight 161 stops moving upward, the flexible edge seal portion 155 stops moving downward, and the second counterweight 163 may continue to move upwards until the motorised roller tube 145 is deactivated. At this balancing point, the head seal 150 is configured to adjust itself so that the flexible edge seal portion 155 is in constant contact with the roof of the vehicle when the height of the vehicle varies when loading and unloading.

In order to retract the head seal 150, the motorised roller tube 145 can be activated to wind the blind member 152 upwards and drive the first and second counterweights 161 and 163 downwards.

The flexible edge seal portion 155 comprises a linear member extending horizontally along the distal end 151 of the blind member 152. It will be understood that the distal end 151 of the blind member 152 refers to the end of the head seal 150 that contacts the top surface of the object while in use. The flexible edge seal portion 155 may comprise sand or other suitable deformable weighting material provided in a flexible pouch. As described above, in one embodiment the weight of the flexible edge seal portion 155 may be about 15 kg. For example, a pouch may be formed by folding the distal end 151 of the blind against a main portion of the blind member 152. When installed in a dock ramp assembly, the flexible edge seal portion 155 may be disposed substantially position adjacent to the top of the dock ramp assembly and moved into an in-use position where the edge seal portion 155 abuts the roof of a vehicle. In this manner, a seal may be provided between the roof of the vehicle and the upper portion of the docking bay. The blind member 152 may be formed of a vinyl material.

Figure 4 is a side view of a dock ramp assembly 200 in which the head sealing apparatus 100 of Figure 1 is installed. Referring to Figure 4, the dock ramp assembly is indicated generally by reference numeral 200. The dock ramp assembly 200 may be retrofitted to an existing facility (not shown).

The dock ramp assembly 200 comprises a fixed framework indicated generally by reference numeral 202. A forward side of the fixed framework 202 defines a docking opening indicated generally by reference numeral 204. A rearward side of the fixed framework 202 may abut against and be connected to the facility.

The docking opening 204, on the forward side, may be defined by an upper peripheral edge 206, a lower peripheral edge 208 and side peripheral edges (not shown) which are adjacent to the periphery of the docking opening 204.

A facility opening (not shown) leading into the facility may be provided adjacent the rearward side of the fixed framework 202 and may be encompassed by the dock ramp assembly 200.

For clarity, actuatable side seals which may form part of the dock ramp assembly are not shown in Figure 4. However, it will be easily understood by a person skilled in the art that an actuatable side seal may be located around the periphery of the docking opening 204. Such actuatable side seals may have a retracted, inoperable state and an extended, operable state as per the head seal of the present disclosure. When in its extended, operable state, the actuatable side seals and the head sealing apparatus of the present disclosure may form a complete seal around the transport vehicle when a transport vehicle is docked with the docking opening 204. The seal may be configured to come into contact with and abut against a trailer portion of the transport vehicle so as to form a sealed passageway between the interior of the transport vehicle, through the dock ramp assembly 200, into an interior of the facility.

In Figure 4, it can be seen that a transport vehicle indicated generally by reference numeral 300 is in the process of docking with the dock ramp assembly 200 by reversing to a position adjacent the docking opening 204. The transport vehicle 300 may comprise an interior 302 defined by a roof 304 of the transport vehicle 300, a rearward access door 306 of the transport vehicle 300, and, an underside 308 of the transport vehicle 300.

In Figure 4, the head seal 150 of the sealing apparatus 100 of the present disclosure may be manoeuvred into its extended, operable state to depend from an underside of the docking opening 204 to abut against the roof 304 of the transport vehicle 300. In the extended, operable state, the flexible edge seal portion 155 of the head seal 150 abuts the roof 304 the transport vehicle 300 so as to form a sealed passageway, from the interior 302 of the transport vehicle 300, through the docking opening 204 of the dock ramp assembly 100, to an interior of the facility (not shown). As has been described above, the head seal 150 can be adjusted vertically in this balanced operable state to compensate for variations in the height of the vehicle 300.

As can be seen, the creation of a vertically moveable head seal which provides a seal between the roof 304 of the transport vehicle 300 and the docking opening 204 is highly advantageous as a sealed passageway can be formed.

Some advantages of the present invention include the fact that the head seal accommodates variations in vehicle or object height caused by loading or unloading of the vehicle or object in an opening in which the vehicle or object is positioned. In the embodiment of a vehicle docked in an opening of a facility, the present invention caters for the camber of vehicle roof should the vehicle be carrying a greater weight on one side. In addition, the present invention allows for a bounce of vehicle should it manoeuvre over a ramp or if a heavy weight is loaded or unloaded.

It will be understood that the dock ramp assembly 200, and in particular the docking opening 204, may be located within an interior of the facility. In such an embodiment, the docking opening would create an enclosed space within the confines of the facility. The term "actuatable seal" when used in context of the preceding specification will be understood to refer to a seal which can act to transition itself between an operable state and an inoperable state. It will be understood that the act could comprise inflation and deflation of a sealing bladder, mechanical extension and retraction of a sealing lip, and the like.

The terms "comprise" and "include", and any variations thereof required for grammatical reasons, are to be considered as interchangeable and accorded the widest possible interpretation.

The present invention is not limited to the embodiments hereinbefore described which may be varied in both construction and detail within the scope of the appended claims.

## Claims

1. A head sealing apparatus (100) for forming a seal between the top peripheral edge of a substantially vertically-oriented opening and a top surface of an industrially-sized object when the object is positioned within the opening, the apparatus comprising:
a vertically moveable head seal (150) configured to extend downwards over the opening and contact the top surface of the object, and
a vertically moveable counterweight arrangement (160) for balancing the load of the head seal so that the height of the head seal is adjustable to allow for variations in the height of the object,
wherein the vertically moveable counterweight arrangement (160) comprises first and second counterweights (161, 163) for balancing the weight of the head seal and configured to move relative to each other, the first counterweight (161) being configured to balance the weight of the head seal (150) in an operable position, the head sealing-apparatus further comprising a roller tube (140) wherein a first cable (164) is further attached to and configured to be wound around the roller tube, the head sealing apparatus (100) being **characterized in that** the second counterweight (163) is configured to contact the first counterweight (161) to limit the upward movement of the first counterweight relative to the second counterweight;
and **in that** the head sealing apparatus further comprises a motorised roller tube (145), wherein a second cable (162) attached to the second counterweight is further attached to and configured to be wound around the motorised tube
wherein the motorised roller tube (145) and the second counterweight are configured to move the head seal between a retracted position and the operable position
wherein, in use, with the head seal in the retracted position, the weight of the head seal biases the first counterweight upwards against the second counterweight
wherein the motorised roller tube is configured to be activated to wind the second counterweight in an upward direction, so that the first counterweight moves upward with the second counterweight
wherein the upward movement of the first and second counterweights causes the head seal to move downwards towards the top surface of the object until the first counterweight balances the weight of the head seal.

2. The apparatus of claim 1, wherein the first and second counterweights (161, 163) are constrained to move in a vertically-oriented guide rail (167).

3. The apparatus of claim 2, wherein the first counterweight (161) is configured in the form of a linear elongated member having an edge portion protruding laterally from a bottom of the elongated member.

4. The apparatus of claim 2 or 3, being configured in at least one of the following ways:
wherein the second counterweight (163) is configured in the form of an elongated housing adapted to receive the first counterweight; or
wherein the second counterweight (163) is configured in the form of a reverse elongated U shape when in use.

5. The apparatus of any preceding claim, wherein the head seal comprises a blind member (152) configured to be wound around the roller rube (140).

6. The apparatus of claim 5, comprising a flexible edge seal portion (155) at a distal end of the blind member (152), the flexible edge seal portion configured for forming a seal between the opening and the top surface of the object, wherein the flexible edge seal portion of the head seal is heavier than the weight of each of the first and second counterweights.

7. The apparatus of any preceding claim,
wherein the second counterweight (163) is attached to the second cable (162) at a lateral portion connecting two longitudinal side portions of the second counterweight.

8. The apparatus of claim 7, wherein the edge portion of the first counterweight (161) is configured to abut the longitudinal side portions of the second counterweight (163) to limit the movement of the first counterweight upward relative to the second counterweight.

9. The apparatus of claim 7 or 8, wherein the first cable (164) is configured to pass through an aperture (163c) in the lateral portion of the second counterweight (163), thus allowing the first counterweight (161) to slide within the second counterweight (163).

10. The apparatus of any preceding claim, wherein the second counterweight (163) is substantially the same weight as the first counterweight (161).

11. The apparatus of any preceding claim, being configured for forming a seal between the top peripheral edge of an opening of a facility and a roof of a transport vehicle when the transport vehicle is docked with the facility.

## Patentansprüche

1. Kopfdichtungsvorrichtung (100) zum Bilden einer Dichtung zwischen der oberen peripheren Kante einer im Wesentlichen vertikal ausgerichteten Öffnung und einer oberen Fläche eines industriell dimensionierten Objekts, wenn das Objekt in der Öffnung positioniert ist, wobei die Vorrichtung Folgendes umfasst:
eine vertikal bewegliche Kopfdichtung (150), welche dazu konfiguriert sind, sich abwärts über die Öffnung zu erstrecken und die obere Fläche des Objekts zu berühren, und
eine vertikal bewegliche Gegengewichtanordnung (160) zum Ausgleichen der Last der Kopfdichtung, so dass die Höhe der Kopfdichtung anpassbar ist, um Variationen bei der Höhe des Objekts zuzulassen,
wobei die vertikal bewegliche Gegengewichtanordnung (160) ein erstes und zweites Gegengewicht (161, 163) umfasst, um das Gewicht der Kopfdichtung auszugleichen und welche dazu konfiguriert sind, sich aufeinander bezogen zu bewegen, wobei das erste Gegengewicht (161) dazu konfiguriert ist, das Gewicht der Kopfdichtung (150) in einer betriebsfähigen Position auszugleichen, wobei die Kopfdichtungsvorrichtung ferner ein Rollenrohr (140) umfasst, wobei ein erstes Seil (164) ferner an dem Rollenrohr angebracht ist und dazu konfiguriert ist, um das Rollenrohr gewickelt zu sein, wobei die Kopfdichtungsvorrichtung (100) **dadurch gekennzeichnet ist, dass** das zweite Gegengewicht (163) dazu konfiguriert ist, das erste Gegengewicht (161) zu berühren, um die Aufwärtsbewegung des ersten Gegengewichts bezogen auf das zweite Gegengewicht zu begrenzen;
und dadurch, dass die Kopfdichtungsvorrichtung ferner ein motorisiertes Rollenrohr (145) umfasst, wobei ein zweites Seil (162), welches an dem zweiten Gegengewicht befestigt ist, ferner an dem motorisierten Rohr angebracht ist und dazu konfiguriert ist, um das motorisierte Rohr gewickelt zu sein
wobei das motorisierte Rollenrohr (145) und das zweite Gegengewicht dazu konfiguriert sind, die Kopfdichtung zwischen einer eingefahrenen Position und der betriebsfähigen Position zu bewegen
wobei das Gewicht der Kopfdichtung bei der Verwendung und mit der Kopfdichtung in der eingefahrenen Position das erste Gegengewicht aufwärts gegen das zweite Gegengewicht vorspannt
wobei das motorisierte Rollenrohr dazu konfiguriert ist, aktiviert zu werden, um das zweite Gegengewicht in einer Aufwärtsrichtung aufzuwickeln, so dass sich das erste Gegengewicht mit dem zweiten Gegengewicht aufwärts bewegt
wobei die Aufwärtsbewegung des ersten und zweiten Gegengewichts die Kopfdichtung dazu veranlasst, sich abwärts zu der oberen Fläche des Objekts zu bewegen bis das erste Gegengewicht das Gewicht der Kopfdichtung ausgleicht.

2. Vorrichtung nach Anspruch 1, wobei das erste und zweite Gegengewicht (161, 163) dazu gezwungen sind, sich in einer vertikal ausgerichteten Führungsschiene (167) zu bewegen.

3. Vorrichtung nach Anspruch 2, wobei das erste Gegengewicht (161) in Form eines linear länglichen Elements konfiguriert ist, welches einen Kantenteil aufweist, welcher lateral von einem Boden des länglichen Elements vorsteht.

4. Vorrichtung nach Anspruch 2 oder 3, welche auf eine der folgenden Weisen konfiguriert ist:
wobei das zweite Gegengewicht (163) in der Form eines länglichen Gehäuses konfiguriert ist, welches dazu ausgelegt ist, das erste Gegengewicht aufzunehmen; oder
wobei das zweite Gegengewicht (163) in Benutzung in der Form einer umgekehrten länglichen U-Form konfiguriert ist.

5. Vorrichtung nach einem der vorstehenden Ansprüche, wobei die Kopfdichtung ein Rollladenelement (152) umfasst, welches dazu konfiguriert ist, um das Rollenrohr (140) gewickelt zu sein.

6. Vorrichtung nach Anspruch 5, umfassend einen flexiblen Kantendichtungsteil (155) an einem distalen Ende des Rolladenelements (152), wobei der flexible Kantendichtungsteil dazu konfiguriert ist, eine Dichtung zwischen der Öffnung und der oberen Fläche des Objekts zu bilden, wobei der flexible Kantendichtungsteils der Kopfdichtung schwerer als das Gewicht jedes des ersten und zweiten Gegengewichts ist.

7. Vorrichtung nach einem der vorstehenden Ansprüche, wobei das zweite Gegengewicht (163) an dem zweiten Seil (162) an einem lateralen Teil angebracht ist, welcher zwei Längsseitenteile des zweiten Gegengewichts verbindet.

8. Gerät nach Anspruch 7, wobei der Kantenteil des ersten Gegengewichts (161) dazu konfiguriert ist, an die Längseitenteile des zweiten Gegengewichts (163) anzugrenzen, um die Bewegung des ersten Gegengewichts bezogen auf das zweite Gegengewicht aufwärts zu begrenzen.

9. Vorrichtung nach Anspruch 7 oder 8, wobei das erste Seil (164) dazu konfiguriert ist, durch eine Öffnung (163c) in den lateralen Teil des zweiten Gegengewichts (163) zu laufen, wodurch dem ersten Gegengewicht (161) ermöglicht wird, sich in dem zweiten Gegengewicht (163) zu verschieben.

10. Vorrichtung nach einem der vorstehenden Ansprüche, wobei das zweite Gegengewicht (163) im Wesentlichen das gleiche Gewicht hat wie das erste Gegengewicht (161).

11. Vorrichtung nach einem der vorstehenden Ansprüche, welche zum Bilden einer Dichtung zwischen der oberen peripheren Kante einer Öffnung eines Gebäudes und eines Dachs eines Transportfahrzeugs konfiguriert ist, wenn das Transportfahrzeug an das Gebäude angedockt ist.

## Revendications

1. Appareil d'étanchéité de tête (100) pour former un joint d'étanchéité entre le bord périphérique supérieur d'une ouverture orientée sensiblement verticalement et une surface supérieure d'un objet de taille industrielle lorsque l'objet est positionné dans l'ouverture, l'appareil comprenant :
un joint de tête (150) mobile verticalement conçu pour s'étendre vers le bas sur l'ouverture et entrer en contact avec la surface supérieure de l'objet, et
un agencement de contrepoids (160) mobile verticalement pour équilibrer la charge du joint de tête de sorte que la hauteur du joint de tête soit réglable pour permettre des variations de la hauteur de l'objet,
dans lequel l'agencement de contrepoids (160) mobile verticalement comprend des premier et second contrepoids (161, 163) pour équilibrer le poids du joint de tête et conçus pour se déplacer l'un par rapport à l'autre, le premier contrepoids (161) étant conçu pour équilibrer le poids du joint de tête (150) dans une position de fonctionnement, l'appareil d'étanchéité de tête comprenant en outre un tube d'enroulement (140), dans lequel un premier câble (164) est en outre attaché et conçu pour être enroulé autour du tube d'enroulement, l'appareil d'étanchéité de tête (100) étant **caractérisé en ce que** le second contrepoids (163) est conçu pour entrer en contact avec le premier contrepoids (161) pour limiter le mouvement vers le haut du premier contrepoids par rapport au second contrepoids ;
et **en ce que** l'appareil d'étanchéité de tête comprend en outre un tube d'enroulement motorisé (145), dans lequel un second câble (162) attaché au second contrepoids est en outre attaché et conçu pour être enroulé autour du tube motorisé
dans lequel le tube d'enroulement motorisé (145) et le second contrepoids sont conçus pour déplacer le joint de tête entre une position rétractée et la position de fonctionnement
dans lequel, en cours d'utilisation, avec le joint de tête en position rétractée, le poids du joint de tête sollicite le premier contrepoids vers le haut contre le second contrepoids
dans lequel le tube d'enroulement motorisé est conçu pour être activé afin d'enrouler le second contrepoids dans une direction vers le haut, de sorte que le premier contrepoids se déplace vers le haut avec le second contrepoids
dans lequel le mouvement vers le haut des premier et second contrepoids amène le joint de tête à se déplacer vers le bas vers la surface supérieure de l'objet jusqu'à ce que le premier contrepoids équilibre le poids du joint de tête.

2. Appareil selon la revendication 1, dans lequel les premier et second contrepoids (161, 163) sont contraints de se déplacer dans un rail de guidage orienté verticalement (167).

3. Appareil selon la revendication 2, dans lequel le premier contrepoids (161) est conçu sous la forme d'un élément allongé linéaire ayant une partie de bord faisant saillie latéralement à partir d'une partie inférieure de l'élément allongé.

4. Appareil selon la revendication 2 ou 3, conçu d'au moins l'une des manières suivantes :
dans lequel le second contrepoids (163) est conçu sous la forme d'un boîtier allongé adapté pour recevoir le premier contrepoids ; ou
dans lequel le second contrepoids (163) est conçu sous la forme d'un U allongé inversé en cours d'utilisation.

5. Appareil selon une quelconque revendication précédente, dans lequel le joint de tête comprend un élément borgne (152) conçu pour être enroulé autour du rouleau d'enroulement (140).

6. Appareil selon la revendication 5, comprenant une partie de joint de bord flexible (155) au niveau d'une extrémité distale de l'élément borgne (152), la partie de joint de bord flexible étant conçue pour former un joint entre l'ouverture et la surface supérieure de l'objet, dans lequel la partie de joint de bord flexible du joint de tête a un poids supérieur au poids de chacun des premier et second contrepoids.

7. Appareil selon une quelconque revendication précédente, dans lequel le second contrepoids (163) est attaché au second câble (162) au niveau d'une partie latérale reliant deux parties latérales longitudinales du second contrepoids.

8. Appareil selon la revendication 7, dans lequel la partie de bord du premier contrepoids (161) est conçue pour venir en butée contre les parties latérales longitudinales du second contrepoids (163) pour limiter le mouvement du premier contrepoids vers le haut par rapport au second contrepoids.

9. Appareil selon la revendication 7 ou 8, dans lequel le premier câble (164) est conçu pour passer à travers un orifice (163c) dans la partie latérale du second contrepoids (163), permettant ainsi au premier contrepoids (161) de coulisser dans le second contrepoids (163).

10. Appareil selon une quelconque revendication précédente, dans lequel le second contrepoids (163) a sensiblement le même poids que le premier contrepoids (161).

11. Appareil selon une quelconque revendication précédente, conçu pour former un joint entre le bord périphérique supérieur d'une ouverture d'une installation et un toit d'un véhicule de transport lorsque le véhicule de transport est amarré à l'installation.
